# EUROPEAN PATENT SPECIFICATION

(11) **EP 2 748 980 B1**
(45) Date of publication and mention of the grant of the patent: **11.05.2016**
(21) Application number: 11877172.4
(22) Date of filing: 09.12.2011
(51) Int. Cl.: H04L 12/437, H04L 12/703, H04L 12/723, H04L 12/707

(54) **DISCOVERING FORWARDING INFORMATION FOR LOCAL REPAIR**
ENTDECKUNG VON WEITERLEITUNGSINFORMATIONEN FÜR LOKALE REPARATUR
DÉCOUVERTE D'INFORMATIONS D'ACHEMINEMENT POUR RÉPARATION LOCALE

(43) Date of publication of application: 02.07.2014
(73) Proprietor: Telefonaktiebolaget LM Ericsson (publ), 164 83 Stockholm (SE)
(72) Inventor: SHAO, Mingchao, Beijing 100028 (CN)
(74) Representative: Lind, Robert
(86) International application number: PCT/CN2011/002058
(87) International publication number: WO 2013/082737

(56) References cited:
- CN-A- 101 895 455
- CN-A- 102 088 387
- US-A1- 2002 060 985
- US-A1- 2007 165 515
- US-A1- 2009 225 650

## Description

### TECHNICAL FIELD

The present invention generally relates to the field of network communication, and more particularly relates to discovering forwarding information for local repair.

### BACKGROUND

Multi-Protocol Label Switching (MPLS) technology is used to forward packets based on labels that are attached to each packet. A Label Switched Path (LSP) is comprised of a set of labels assigned at each hop of the path. The LSP can be established statically by configuration of management layers, or dynamically by signaling protocols.

Transport Profile of Multi-Protocol Label Switching (MPLS-TP) is a packet-based transport technology based on the MPLS data plane which re-uses many aspects of the MPLS management and control planes. LSP is also used by MPLS-TP as a transport path for data forwarding.

In an MPLS-TP network, survivability is critical for the delivery of guaranteed network services, such as those subject to strict Service Level Agreements (SLAs) which place maximum bounds on the length of time that services may be degraded or be unavailable. Survivability means the ability of the network to recover traffic within a certain time in case of failure of the transport path that is used to deliver service. The failure of a LSP can be caused by link or node failure along the LSP. Based on different recovery contexts, two different protection schemes have been defined, one is linear protection which can recover the whole LSP from end to end, and the other is local repair which can repair the LSP at point(s) where a link or node failure is detected.

In a MPLS network, LSP can be established by dynamic control plane, e.g. Label Distribution Protocol (LDP) and Resource Reservation Protocol-Traffic Engineering (RSVP-TE). If the LSP is established by RSVP-TE, a network node for configuring local repair for its downstream node to be protected can get an egress label for the downstream node of the LSP using a Route Record Object (RRO) in RSVP-TE. However, the presence of a distributed control plane (e.g. RSVP-TE) in an MPLS-TP network is optional. In practice, there are scenarios where the control plane is not present in the MPLS-TP network, especially during beginning years of MPLS-TP deployment. In these scenarios, all the LSPs and protection path should be established by customers using management interface. In an operating MPLS-TP network, there can be hundreds and thousands of LSPs, so it will be a huge burden for customers to configure the egress label for the node to be protected of each of the LSPs at the node for configuring local repair, and the effort will grow with the number of nodes to be protected in the network since each of the nodes need similar configuration at its upstream nodes. In addition, the manual configuration will increase configuration errors.

US 2009/225650 A1 relates to path reroute in a computer network.

U 2007165515 A1 discloses a technique of dynamically protecting against failure of a head-end node of one or more primary Traffic Engineering Label Switched Paths in a computer network.

CN 102 088 387 A discloses a tunnel protection method and device of ring network.

### SUMMARY

An object of the present invention is to provide a solution for discovering forwarding information for local repair, which obviates at least one of the above-mentioned disadvantages.

According to a first aspect of the invention, there is provided a network node device according to claim 1.

Also disclosed herein is a network node device for configuring local repair for its downstream node or downstream link to be protected in at least one transport path. The network node device comprises a building unit adapted to build a discovery message for discovering forwarding information, wherein the discovery message contains information related to the at least one transport path, a transmitting unit adapted to transmit the discovery message over a protection path for protecting the downstream node or downstream link to a peer end device of the protection path, and a receiving unit adapted to receive a discovery response message containing the forwarding information from the peer end device, the discovery response message being built by the peer end device on the basis of the discovery message.

According to an embodiment of the present invention, the network node device and the peer end device are Label Switched Routers in Multi-Protocol Label Switching (MPLS) network, and the at least one transport path is a Label Switched Path (LSP) in the MPLS network.

According to an embodiment of the present invention, the protection path is a Sub-Path Maintenance Entity (SPME) path.

According to an embodiment of the present invention, the network node device further comprises a configuring unit adapted to configure a failover object as containing the forwarding information.

According to an embodiment of the present invention, the network node device further comprises an encapsulating unit adapted to encapsulate traffic of the at least one transport path into the protection path using the failover object when failure is detected in the downstream node or downstream link.

According to an embodiment of the present invention, the information related to the at least one transport path is one or more identifiers corresponding to the at least one transport path.

According to an embodiment of the present invention, the forwarding information is an ingress label for the peer end device of the at least one transport path.

According to an embodiment of the present invention, the encapsulating unit comprises a swapping unit adapted to swap an ingress label for the network node device of the at least one transport path to the ingress label for the peer end device of the at least one transport path, wherein the ingress label for the peer end device is used to forward traffic at the peer end device, and a forwarding unit adapted to forward traffic from the network node device to the peer end device by label switching over the protection path.

According to a second aspect of the invention, there is provided a method of obtaining forwarding information in a network node device according to claim 6.

Also disclosed herein is a method of obtaining forwarding information in a network node device, the network node device being used to configure local repair for its downstream node or downstream link to be protected in at least one transport path. The method comprises building a discovery message for discovering the forwarding information, wherein the discovery message contains information related to the at least one transport path, transmitting the discovery message over a protection path for protecting the downstream node or downstream link to a peer end device of the protection path, and receiving a discovery response message containing the forwarding information from the peer end device, the discovery response message being built by the peer end device on the basis of the discovery message.

According to an embodiment of the present invention, the network node device and the peer end device are Label Switched Routers in Multi-Protocol Label Switching (MPLS) network, and the at least one transport path is a Label Switched Path (LSP) in the MPLS network.

According to an embodiment of the present invention, the protection path is a Sub-Path Maintenance Entity (SPME) path.

According to an embodiment of the present invention, the method further comprises configuring a failover object as containing the forwarding information.

According to an embodiment of the present invention, the method further comprises encapsulating traffic of the at least one transport path into the protection path using the failover object when failure is detected in the downstream node or downstream link.

According to an embodiment of the present invention, the information related to the at least one transport path is one or more identifiers corresponding to the at least one transport path.

According to an embodiment of the present invention, the forwarding information is an ingress label for the peer end device of the at least one transport path.

According to an embodiment of the present invention, the step of encapsulating comprises swapping an ingress label for the network node device of the at least one transport path to the ingress label for the peer end device of the at least one transport path at the network node device, forwarding traffic from the network node device to the peer end device by label switching over the protection path, and forwarding traffic on the basis of the ingress label for the peer end device at the peer end device.

According to a third aspect of the present invention, there is provided a computer program product according to claim 12.

Also disclosed herein is a computer program product, comprising a computer readable medium, having stored thereon computer executable codes, when executed, causing a processor to perform the method according to the present invention.

According to a fourth aspect of the present invention, there is provided a computer readable medium according to claim 13.

Also disclosed herein is a computer readable medium, having stored thereon computer executable codes, when executed, causing a processor to perform the method according to the present invention.

The embodiments of the present invention do not depend on existence of control plane, and reduce the possibility of wrong configurations caused by human errors and thus improve usability of transport network, and thus reduce Operational Expense (OPEX) for operators.

### BRIEF DESCRIPTION OF THE DRAWINGS

The accompanying drawings are included to provide a further understanding of embodiments and are incorporated in and constitute a part of this description. The drawings illustrate embodiments and together with the description serve to explain principles of embodiments. The elements of the drawings are not necessarily to scale relative to each other. Like reference numerals designate corresponding similar parts. It should be expressly understood that the drawings are included for illustrative purposes and do not in any manner limit the scope of the present invention.
Figure 1 is a block diagram illustrating a network node device according to an embodiment of the present invention;
Figure 2 is a diagram illustrating exemplary Multi-Protocol Label Switching (MPLS) ring topology having Sub-Path Maintenance Entity (SPME) applied, to which embodiments of the present invention can apply;
Figure 3 is a block diagram illustrating an encapsulating unit according to an embodiment of the present invention;
Figure 4 is a diagram illustrating a label discovery message for discovering an ingress label of a peer end device according to an embodiment of the present invention;
Figure 5 is a diagram illustrating a label discovery response message used by the peer end device to update its ingress label according to an embodiment of the present invention;
Figure 6 is a flow chart illustrating a method of obtaining forwarding information in a network node device according to an embodiment of the present invention;
Figure 7 is a flow chart illustrating a step of encapsulating according to an embodiment of the present invention; and
Figure 8 is a diagram illustrating an exemplary network node device comprising a control module and a forwarding module according to an embodiment of the present invention.

### DETAILED DESCRIPTION

In the following description, for purposes of explanation rather than limitation, specific details, such as the particular architecture, structure, techniques, etc., are set forth for illustration. However, it will be apparent to those of ordinary skill in the art that other embodiments that depart from these specific details would still be understood to be within the scope of the present invention. Moreover, for the purpose of clarity, detailed descriptions of well-known devices, circuits, and methods are omitted so as not to obscure the description of the present invention. It is to be understood that the features of the various exemplary embodiments described herein may be combined with each other, unless specifically noted otherwise.

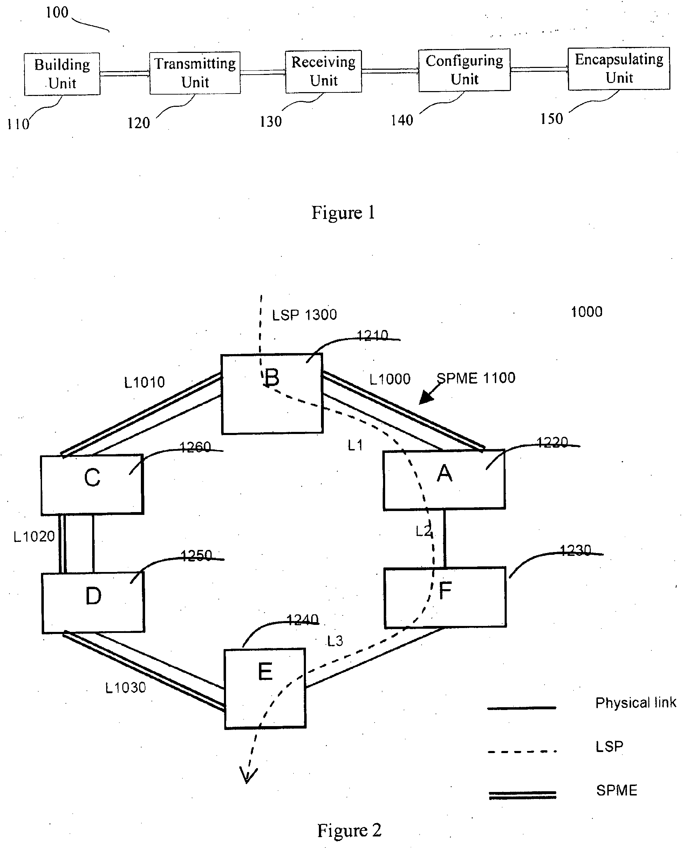

Figure 1 is a block diagram illustrating a network node device 100 for configuring local repair for its downstream node or downstream link to be protected in at least one transport path according to an embodiment of the present invention. As shown in Figure 1, the network node device 100 comprises a building unit 110, a transmitting unit 120, and a receiving unit 130. Optionally, the network node device 100 also comprises a configuring unit 140 and an encapsulating unit 150.

According to an embodiment of the present invention, the building unit 110 may build a discovery message (e.g., a label discovery message) for discovering forwarding information. The discovery message may contain information related to the at least one transport path. Then, the transmitting unit 120 may transmit the discovery message over a protection path for protecting the downstream node or downstream link to a peer end device of the protection path. Afterwards, the receiving unit 130 may receive a discovery response message (e.g., a label discovery response message) from the peer end device. The discovery response message may contain the forwarding information and is built by the peer end device on the basis of the discovery message.

Optionally, the network node device and the peer end device may be Label Switched Routers (LSRs) in Multi-Protocol Label Switching (MPLS) network, and the at least one transport path may be a Label Switched Path (LSP) in the MPLS network. Hereinafter, the present invention will be described with respect to the MPLS, LSP and LSR. However, such description is only exemplary, rather than restrictive, and the present invention is also applicable to other types of network, transport paths and routers.

Optionally, the protection path may be a Sub-Path Maintenance Entity (SPME) path. Hereinafter, the present invention will be described with respect to SPME. However, such description is only exemplary, rather than restrictive, and the present invention is also applicable to other types of tunnels, such as a Generic Routing Encapsulation (GRE) tunnel or Internet Protocol Security (IPsec) tunnel.

Figure 2 is a diagram illustrating exemplary MPLS ring topology having SPME applied, to which embodiments of the present invention can apply. Hereinafter, the present invention will be described with respect to MPLS ring topology. However, such description is only exemplary, rather than restrictive, and the present invention is also applicable to other types of topologies.

Ring protection is a scenario where local repair is applied to the nodes in a ring topology. In ring protection, SPME is a construct to aggregate all LSP traffic that traverse a link or node to be protected. To protect a downstream node or a downstream link, a protection SPME path is provisioned by an upstream node and is used to aggregate all LSP traffic along the protection SPME path, while bypassing failed links or nodes.

Referring to Figure 2, the MPLS ring topology 1000 includes a set of LSRs (1210 through 1260). Each network node device is connected with two other network node devices, and thus forms a ring topology. LSPs can enter and exit the ring from any of the network node devices. For exemplary purpose, LSP 1300 enters the ring at a network node device B (LSR 1210), traverses the ring through B→A→F→E, and exits the ring at a peer end device E (LSR 1240).

To protect the LSP 1300 from the failure of a network node device F (LSR 1230) or a link around the network node device F along the LSP 1300, a protection SPME path 1100 is established from the network node device A to E along the SPME path A→B→C→D→E.

In this case, the network node device A is the network node device 100 for configuring local repair for its downstream node (i.e., the network node device F) or downstream link, and the peer end device E is the peer end device along the SPME path. However, such arrangement is only exemplary, and different arrangements will apply to different groups of nodes. For example, if the network node device A is the one to be protected, the network node device B may be the network node device for configuring local repair, and the network node device F may be the peer end device along the SPME path. In practice, local repair will be configured for each of all the network node devices or links in the network to protect potential failure.

Further, it is noted that only one LSP and one SPME path are shown in Figure 2 for exemplary purpose, but in practice, a plurality of LSPs and a plurality of SPME paths may coexist in the ring topology. Typically, one SPME path can be used to protect multiple LSPs.

According to an embodiment of the present invention, in order to configure local repair at the network node device A, firstly, the protection SPME path 1100 is configured, and then the LSP 1300 is configured to be protected by the protection SPME path 1100. After that, the building unit 110 may build a label discovery message for discovering forwarding information. The discovery message may contain information related to the LSP 1300. Optionally, the information related to the LSP 1300 contained in the label discovery message may be an identifier of the LSP 1300.

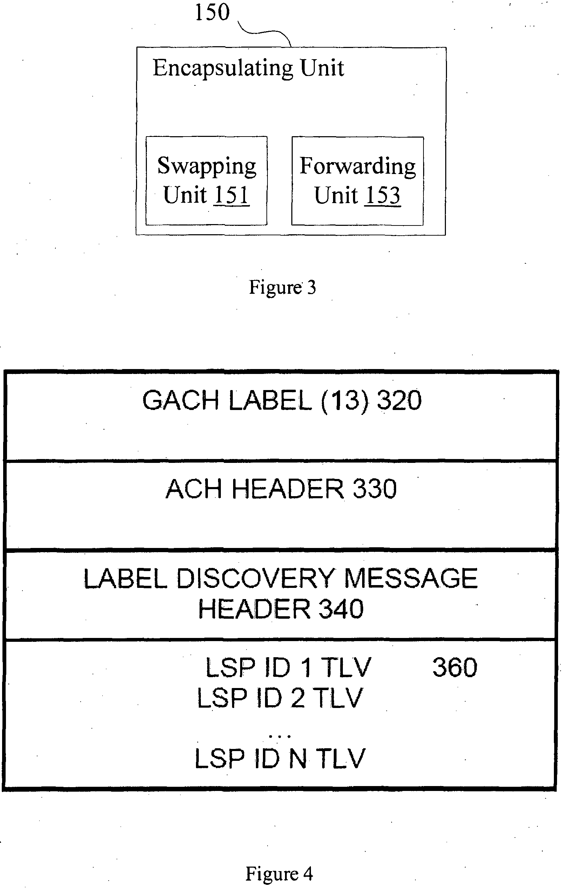

Figure 4 is a diagram illustrating the label discovery message according to an embodiment of the present invention. As shown in Figure 4, GAch Label (13) 320 is used as an exception mechanism to make sure that the message will be processed by a receiving side of the label discovery message. ACH header 330 is a generic associated channel header. A new channel type shall be allocated from the pseudowire (PW) Associated Channel Type registry by the Internet Assigned Numbers Authority (IANA), or an experimental channel type in the range of (32760, 32767) can be used. Label discovery message header 340 is a new defined header specific for the label discovery message and label discovery response message. The header can include a version number, a message type to identify if payload is the label discovery message or the label discovery response message, a length field to specify the length of the message including this header, a sequence number to identify specific instances of messages, and a More bit to identify if it is the last message in a sequence of segmented messages. The message content 360 can be one or more LSP identifiers, the LSP identifiers are of Type-Length-Value (TLV) format.

Then, the transmitting unit 120 in the network node device 100 may transmit the label discovery message built by the building unit 110 over the SPME path 1100 to the peer end device E to discover the forward information. The forwarding information is used to restore the traffic back into the original transport path (i.e., LSP 1300) at the peer end device E from the protection SPME path 1100, and thereafter the traffic may be further forwarded to subsequent nodes along the original LSP 1300. In an embodiment, it may be an ingress label L3 for the transport path LSP 1300 at the peer end device E of the SPME path 1100. It is known that an egress label L3 for the network node device F of the LSP 1300 is the same as the ingress label L3 for the peer end device E of LSP 1300.

According to an embodiment of the present invention, in the case of presence of a plurality of LSPs to be protected, in order to reduce the number of the label discovery messages sent over the network, the network node device A may delay to transmit the label discovery messages, so that more LSP identifiers can be included in a single label discovery message. In another alternative design, the network node device A may let the administrator have the flexibility to issue an explicit command to invoke the transmitting of label discovery messages after all the LSPs are configured. If all the LSPs cannot be placed into one label discovery message, the network node device A should be able to transmit multiple segmented label discovery messages.

When the peer end device E receives the label discovery message, it will send back a label discovery response message over the SPME path 1100, the ingress label L3 for the peer end device E of the LSP 1300 may be included in the message. Optionally, the label discovery message and the label discovery response message may be transmitted by a MPLS Generic Associated Channel.

In particular, in the case of presence of a plurality of LSPs to be protected, the peer end device E of the SPME path 1100 may look through all the LSP identifiers in the label discovery message. Each LSP identifier will be looked up to validate if a corresponding LSP exists. If a LSP exists, then an ingress label for the peer end device of the LSP will be fetched and stored, which will be used later to build the label discovery response message. After all the LSPs in the label discovery message are processed, the building of label discovery response message is finished.

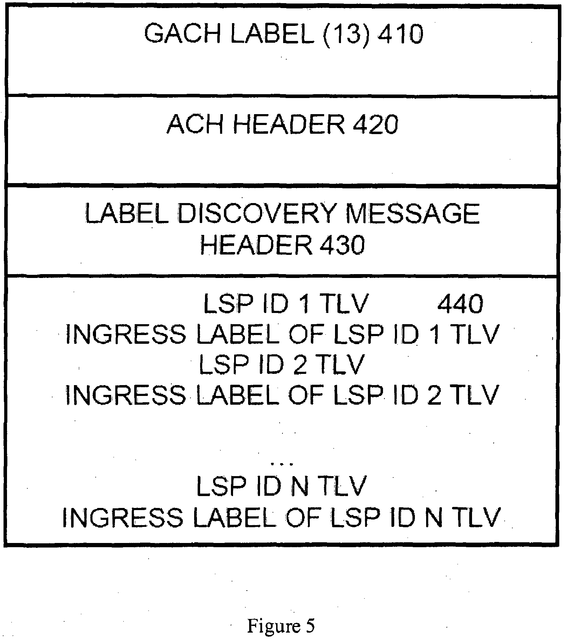

Figure 5 is a diagram illustrating a label discovery response message. As shown in Figure 5, GAch Label (13) 410 and ACH Header 420 are the same as those in the label discovery message illustrated in Figure 4. Label discovery message Header 430 is the same as the one in label discovery message except that the message type field in the header is the type of label discovery response message. Message content 440 may be one or more pairs of LSP identifiers and ingress labels. Both LSP identifiers and ingress labels are of TLV format.

Then, the label discovery response message is sent through the SPME path 1100 to the network node device A. In the case of presence of a plurality of LSPs to be protected, if all the requested LSPs and their ingress labels cannot be placed in one label discovery response message, multiple segmented label discovery response messages should be built. The sequence number in the label discovery message header of the label discovery response message is the same as that of the received label discovery message. The More bit in the label discovery message header is set to 1 if more label discovery response message will be built for the received label discovery message, and it will be set to 0 if it is the last label discovery response message for the received label discovery message.

When the label discovery response message is received, the network node device A will loop through all the LSP identifiers in the message, and validate if the LSP still exists and is configured to be protected by the protection SPME path 1100 over which the label discovery response message is received. If the validation passes, then the network node device A will extract and store an ingress Label for the peer end device E of the LSP 1300 from the message.

According to an embodiment of the present invention, the configuring unit 140 optionally contained in the network node device A may configure a failover object as containing the forwarding information (such as the ingress label L3 for the peer end device E of the LSP 1300) when the label discovery response message is received by the network node device A. After that, the local repair configuration of the LSP 1300 to be protected has been completed. The failover object may be used to locally repair the LSP 1300 when failure is detected at the network node device F or the link around the network node device F along the LSP 1300. The failover object may basically include the ingress label L3 and an identifier of LSP 1300 and an identifier of the SPME path 1100.

According to an embodiment of the present invention, the encapsulating unit 150 optionally contained in the network node device A may encapsulate traffic of the LSP 1300 into the SPME path 1100 using the failover object when failure is detected at the network node device F or the link around the network node device F along the LSP 1300.

Figure 3 is a block diagram illustrating the encapsulating unit 150. As shown in Figure 3, the encapsulating unit 150 may comprise a swapping unit 151 and a forwarding unit 152.

In particular, when the network node device A detects failure at the network node device F or the link around it using detection mechanisms such as BFD (Bidirectional Forwarding Detection), the swapping unit 151 may swap an ingress label L1 for the network node device A of the LSP 1300 to the ingress label L3 for the peer end device E. Then, the forwarding unit 153 may forward traffic from the network node device A to the peer end device E by label switching over the protection SPME path 1100. In particular, the forwarding unit 153 may pushes label L1000 of the SPME path 1100 to the traffic. At intermediate network node devices B, C, and D of the SPME path 1100, the traffic is forwarded solely based on labels L1000, L1010, L1020, and L1030 of the SPME path 1100, and the inner LSP label L3 will not be touched. Then, at the peer end device E, the SPME label L1030 is popped, and the traffic is forwarded on the basis of the ingress label L3 for the peer end device E. After that, the traffic may be forwarded to subsequent nodes along the original LSP 1300.

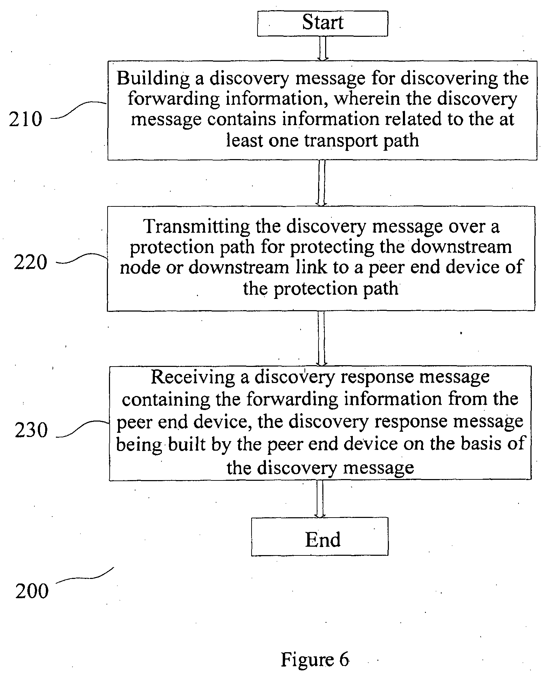

Figure 6 is a flow chart illustrating a method 200 of obtaining forwarding information in a network node device according to an embodiment of the present invention. The network node device may be the network node device 100 according to the present invention, which is used to configure local repair for its downstream node or downstream link to be protected in at least one transport path.

According to an embodiment of the present invention, the method 200 begins with a step 210 of building a discovery message for discovering the forwarding information, wherein the discovery message contains information related to the at least one transport path. Optionally, the step 210 can be performed by the above-described building unit 110 of the network node device 100 according to the present invention.

Then, at step 220, the discovery message is transmitted over a protection path for protecting the downstream node or downstream link to a peer end device (e.g., the peer end device E) of the protection path. Optionally, the step 220 can be performed by the above-described transmitting unit 120 of the network node device 100 according to the present invention.

Afterwards, at step 230, a discovery response message containing the forwarding information is received from the peer end device, the discovery response message being built by the peer end device on the basis of the discovery message. Optionally, the step 230 can be performed by the above-described receiving unit 130 of the network node device 100 according to the present invention.

As described above, according to an embodiment of the present invention, the network node device and the peer end device may be Label Switched Routers in MPLS network, the at least one transport path may be a LSP in the MPLS network, and the protection path may be a SPME path.

Further, as described above with respect to the network node device 100, the information related to the at least one transport path (e.g., the LSP 1300) may be one or more identifiers corresponding to the at least one transport path, and the forwarding information may be an ingress label for the peer end device (e.g., the peer end device E as described above) of the at least one transport path.

Optionally, the method 200 may further comprise a step 240 of configuring a failover object as containing the ingress label for the peer end device, and may still further comprise a step 250 of encapsulating traffic of the at least one transport path (e.g., the LSP 1300) into the protection path (e.g., the protection SPME path 1100) using the failover object when failure is detected in the downstream node or downstream link. Optionally, the steps 240 and 250 can be respectively performed by the above-described configuring unit 140 and encapsulating unit 150 of the network node device 100 according to the present invention.

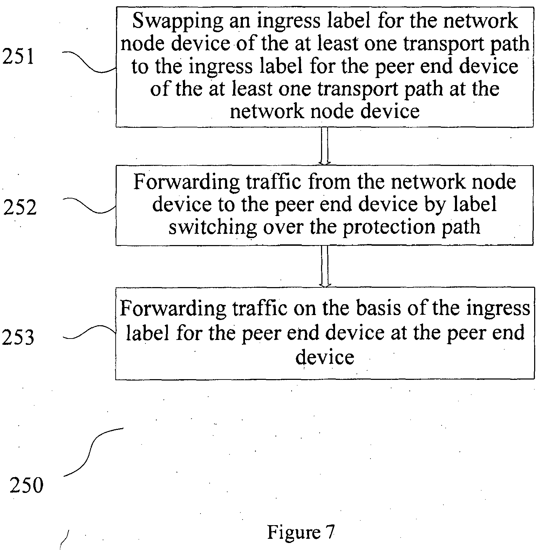

Figure 7 is a flow chart illustrating the step 250 of encapsulating according to an embodiment of the present invention. As shown in Figure 7, the step 250 begins with a step 251 of swapping an ingress label for the network node device (e.g., the network node device A) of the at least one transport path (e.g, the LSP 1300) to the ingress label for the peer end device (e.g., the peer end device E) of the at least one transport path at the network node device. Optionally, the step 251 can be performed by the above-described swapping unit 151 in the encapsulating unit 150 of the network node device 100 according to the present invention.

Then, at step 252, traffic is forwarded from the network node device (e.g., the network node device A) to the peer end device (e.g., the peer end device E) by label switching over the protection path. In particular, for example as shown in Figure 2, the label L1000 of the SPME path 1100 as described above may be pushed to the traffic. At intermediate network node devices B, C, and D of the SPME path 1100, the traffic is forwarded solely based on labels L1000, L1010, L1020, and L1030 of the SPME path 1100, and the inner LSP label L3 will not be touched. Then, at the peer end device E, the SPME label L1030 is popped, and at step 253 the traffic is forwarded on the basis of the ingress label L3 for the peer end device E. After that, the traffic may be forwarded to subsequent nodes along the original LSP 1300.

The above detailed description made with respect to the network node device 100 in connection with Figures 1 to 5 also applies to the steps of the method 200, and is thus not iterated for the sake of conciseness.

Embodiments of the present invention may be implemented in hardware, or as software modules running on one or more processors, or in a combination thereof. That is, those skilled in the art will appreciate that special hardware circuits such as Application Specific Integrated Circuits (ASICs) or Digital Signal Processors (DSPs) may be used in practice to implement some or all of the functionality of all components of the network node device or the peer end device according to an embodiment of the present invention. Some or all of the functionality of the components of the network node device or the peer end device may alternatively be implemented by a processor of an application server in combination with e.g. a computer program product comprising a computer readable medium having stored thereon computer executable codes, which computer executable codes when executed on the processor causes the application server to perform, for example, the steps of the methods according to embodiments of the present invention.

The present invention may also be embodied as one or more device or apparatus programs (e.g. computer programs and computer program products) for carrying out part(s) or all of the steps of the methods described above. Such programs embodying the present invention may be stored on computer readable medium, or could, for example, be in the form of one or more signals. Such signals may be data signals downloadable from an Internet website, or provided on a carrier signal, or in any other forms.

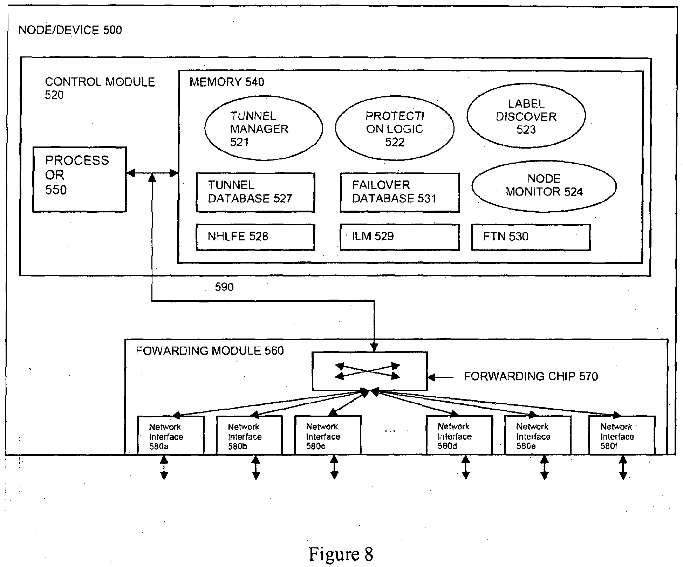

Figure 8 is a diagram illustrating an exemplary network node device comprising a control module and a forwarding module according to an embodiment of the present invention. The network node device may be Label Switched Routers in the MPLS network 100 of Figure 2.

The control module 520 includes a set of processes or instructions including 521 through 524, and data structures including 527 through 531, stored in a memory or data repository 540 and executed by a processor 550. Tunnel Manager 521 and Tunnel Database 527 are used to manage LSP tunnels. Protection Switching Logic 522 is used to determine whether the LSP to be protected should be switched over to its protection SPME path in case of node or link failure along the LSP. Failover Database 531 is used by Protection Switching Logic 522 to store failover objects for LSPs to be protected. Label Discover process 523 is used to transmit label discovery messages and process label discovery response messages. It is invoked by Protection Switching Logic 522 to discover an ingress labels used to setup a failover object. Node Monitor 524 is responsible for detecting node or link failure and notifying Protection Switching Logic 522 once node or link failure is detected. The node failure detection mechanism can be based on BFD or any other mechanisms, and it should be able to distinguish node failures from link failures. Next Hop Label Forwarding Entry (NHLFE) 528 is used when forwarding a labeled packet. NHLFE 528 contains information such as next hop, operation to perform on the packets label stack (e.g. push, swap and pop) and any other information necessary to dispose the packets to next hop. Incoming Label Mapping (ILM) 529 is used to map each incoming label to one or more NHLFEs 528. Forwarding Equivalent Class to NHLFE (FTN) 530 maps each Forwarding Equivalent Class to one or more NHLFEs 528. It is used when packets arrive unlabeled, but which are required to be labeled before being forwarded to next hop.

The forwarding module 560 consists of a forwarding chip 570 and a set of network interfaces 580a through 580f. The forwarding chip 570 is responsible for transmitting and receiving packets between the network interfaces 580 and the control module interface 590, based on information from the control module 520.

It will be appreciated by those skilled in the art that while Figure 8 shows one exemplary embodiment of the network node device or the peer end device (i.e., LSR), alternative embodiments may be implemented (e.g. having more or less processes, more or less data structures, more or less network interfaces, etc.).

The embodiments of the present invention do not depend on existence of control plane, and do not depend on some other communication capability (e.g., Internet Protocol) between the network node device for configuring local repair and the peer end device, in which the communication is solely based on the protection SPME.

The embodiments of the present invention reduce burden for customer to configure the egress label used to encapsulate the traffic of the transport path into the protection path, reduce the possibility of wrong configurations caused by human errors and thus improve usability of transport network, and thus reduce Operational Expense (OPEX) for operators.

It should be noted that the aforesaid embodiments are exemplary rather than limiting the present invention, substitute embodiments may be designed by those skilled in the art without departing from the scope of the claims enclosed. The word "include" does not exclude elements or steps which are present but not listed in the claims. The word "a" or "an" preceding the elements does not exclude the presence of a plurality of such elements. In the apparatus claims that list several components, several ones among these components can be specifically embodied in the same hardware item. The use of such words as first, second, third does not represent any order, which can be simply explained as names.

## Claims

1. A network node device (100) for configuring local repair for its downstream node or downstream link to be protected in at least one transport path, comprising:
a building unit (110) adapted to build a discovery message for discovering an ingress label for a peer end device of the at least one transport path, wherein the discovery message comprises information related to the at least one transport path;
a transmitting unit (120) adapted to transmit the discovery message over a protection path for protecting the downstream node or downstream link to the peer end device of the protection path; and
a receiving unit (130) adapted to receive a discovery response message, comprising the ingress label from the peer end device, the discovery response message being built by the peer end device on the basis of the discovery message.

2. The network node device (100) according to claim 1, wherein the network node device and the peer end device are Label Switched Routers in Multi-Protocol Label Switching (MPLS) network, and the at least one transport path is a Label Switched Path (LSP) (1300) in the MPLS network.

3. The network node device (100) according to claim 1, wherein the protection path is a Sub-Path Maintenance Entity (SPME) path (1100).

4. The network node device (100) according to claim 1, further comprising a configuring unit (140) adapted to configure a failover object as containing the ingress label.

5. The network node device (100) according to claim 4, further comprising an encapsulating unit (150) adapted to encapsulate traffic of the at least one transport path into the protection path using the failover object when failure is detected in the downstream node or downstream link.

6. The network node device according to claim 1, wherein the information related to the at least one transport path is one or more identifiers corresponding to the at least one transport path.

7. The network node device (100) according to claim 5, wherein the encapsulating unit (150) comprises:
a swapping unit (151) adapted to swap an ingress label for the network node device of the at least one transport path to the ingress label for the peer end device of the at least one transport path, wherein the ingress label for the peer end device is used to forward traffic at the peer end device; and
a forwarding unit (153) adapted to forward traffic from the network node device to the peer end device by label switching over the protection path.

8. A method (200) in a network node device (100) of obtaining an ingress label for a peer end device of at least one transport path, the network node device being used to configure local repair for its downstream node or downstream link to be protected in the at least one transport path, comprising:
building (210) a discovery message for discovering the ingress label, wherein the discovery message comprises information related to the at least one transport path;
transmitting (220) the discovery message over a protection path for protecting the downstream node or downstream link to the peer end device of the protection path; and
receiving (230) a discovery response message comprises the ingress label from the peer end device, the discovery response message being built by the peer end device on the basis of the discovery message.

9. The method (200) according to claim 8, wherein the network node device and the peer end device are Label Switched Routers in Multi-Protocol Label Switching (MPLS) network, and the at least one transport path is a Label Switched Path (LSP) (1300) in the MPLS network.

10. The method (200) according to claim 8, wherein the protection path is a Sub-Path Maintenance Entity (SPME) path (1100).

11. The method (200) according to claim 8, further comprising configuring (240) a failover object as comprising the ingress label.

12. The method (200) according to claim 11, further comprising encapsulating (250) traffic of the at least one transport path into the protection path using the failover object when failure is detected in the downstream node or downstream link.

13. The method according to claim 8, wherein the information related to the at least one transport path is one or more identifiers corresponding to the at least one transport path.

14. The method (200) according to claim 12, wherein the step of encapsulating (250) comprises:
swapping (251) an ingress label for the network node device (100) of the at least one transport path to the ingress label for the peer end device of the at least one transport path at the network node device;
forwarding (252) traffic from the network node device to the peer end device by label switching over the protection path; and
forwarding (253) traffic on the basis of the ingress label for the peer end device at the peer end device.

15. A computer program product, comprising a computer readable medium, having stored thereon computer executable codes, when executed, causing a processor to perform the method (200) according to any of claims 8 to 14.

## Patentansprüche

1. Netzknotengerät (100) zum Konfigurieren einer lokalen Reparatur für seinen nachgeschalteten Knoten oder für seine nachgeschaltete Verbindung, welche in zumindest einem Transportweg geschützt werden sollen, umfassend:
eine Aufbaueinheit (110), welche zum Aufbauen einer Entdeckungsnachricht zum Entdecken eines Eintrittslabels für ein Peer-Endgerät des zumindest einen Transportweges ausgebildet ist, wobei die Entdeckungsnachricht auf den zumindest einen Transportweg bezogene Informationen umfasst;
eine Sendeeinheit (120), welche zum Senden der Entdeckungsnachricht über einen Sicherungsweg zum Schützen des nachgeschalteten Knotens oder der nachgeschalteten Verbindung zum Peer-Endgerät des Sicherungsweges ausgebildet ist; und
eine Empfangseinheit (130), welche zum Empfangen einer Entdeckungsantwortnachricht ausgebildet ist, umfassend das Eintrittslabel vom Peer-Endgerät, wobei die Entdeckungsantwortnachricht vom Peer-Endgerät auf der Basis der Entdeckungsnachricht aufgebaut wird.

2. Netzknotengerät (100) nach Anspruch 1, wobei das Netzknotengerät und das Peer-Endgerät Label-Switched-Router in einem Multiprotocol LabelSwitching (MPLS)-Netzwerk sind, und der zumindest eine Transportweg ein Label-Switched-Path (LSP) (1300) im MPLS-Netzwerk ist.

3. Netzknotengerät (100) nach Anspruch 1, wobei der Sicherungsweg ein Sub-Path-Maintenance-Entity (SPME)-Weg (1100) ist.

4. Netzknotengerät (100) nach Anspruch 1, ferner umfassend eine Konfiguriereinheit (140), welche zum Konfigurieren eines Failover-Objekts als das Eintrittslabel umfassendes Objekt ausgebildet ist.

5. Netzknotengerät (100) nach Anspruch 4, ferner umfassend eine Einkapselungseinheit (150), welche zum Einkapseln von Verkehr des zumindest einen Transportweges in den Sicherungsweg, durch Verwendung des Failover-Objekts, ausgebildet ist, wenn ein Ausfall im nachgeschalteten Knoten oder in der nachgeschalteten Verbindung detektiert wird.

6. Netzknotengerät nach Anspruch 1, wobei die Information bezüglich des zumindest einen Transportwegs aus einer oder mehreren dem zumindest einen Transportweg entsprechenden Kennungen besteht.

7. Netzknotengerät (100) nach Anspruch 5, wobei die Einkapselungseinheit (150) umfasst:
eine Austauscheinheit (151), welche zum Austauschen eines Eintrittslabels für das Netzknotengerät des zumindest einen Transportweges mit dem Eintrittslabel für das Peer-Endgerät des zumindest einen Transportweges ausgebildet ist, wobei das Eintrittslabel für das Peer-Endgerät zum Weiterleiten von Verkehr am Peer-Endgerät verwendet wird; und
eine Weiterleitungseinheit (153), welche zum Weiterleiten von Verkehr vom Netzknotengerät an das Peer-Endgerät mittels Labelvermittlung über den Sicherungsweg ausgebildet ist.

8. Verfahren (200) in einem Netzknotengerät (100) zum Erhalten eines Eintrittslabels für ein Peer-Endgerät des zumindest einen Transportweges, wobei das Netzknotengerät zum Konfigurieren einer lokalen Reparatur für seinen nachgeschalteten Knoten oder für seine nachgeschaltete Verbindung, welche in dem zumindest einen Transportweg geschützt werden sollen, verwendet wird, umfassend:
Aufbauen (210) einer Entdeckungsnachricht zum Entdecken des Eintrittslabels, wobei die Entdeckungsnachricht Informationen bezüglich des zumindest einen Transportweges umfasst;
Senden (220) der Entdeckungsnachricht über einen Sicherungsweg zum Schützen des nachgeschalteten Knotens oder der nachgeschalteten Verbindung an das Peer-Endgerät des Sicherungsweges; und
Empfangen (230) einer Entdeckungsantwortnachricht, umfassend das Eintrittslabel vom Peer-Endgerät, wobei die Entdeckungsantwortnachricht vom Peer-Endgerät auf der Basis der Entdeckungsnachricht aufgebaut wird.

9. Verfahren (200) nach Anspruch 8, wobei das Netzknotengerät und das Peer-Endgerät Label-Switched-Router in einem Multiprotocol-Label-Switching (MPLS)-Netzwerk sind, und der zumindest eine Transportweg ein Label-Switched-Path (LSP) (1300) im MPLS-Netzwerk ist.

10. Verfahren (200) nach Anspruch 8, wobei der Sicherungsweg ein Sub-Path-Maintenance-Entity (SPME)-Weg (1100) ist.

11. Verfahren (200) nach Anspruch 8, ferner umfassend das Konfigurieren (240) eines Failover-Objekts als das Eintrittslabel umfassendes Objekt.

12. Verfahren (200) nach Anspruch 11, ferner umfassend das Einkapseln (250) von Verkehr des zumindest einen Transportwegs in den Sicherungsweg, durch Verwenden des Failover-Objekts, falls ein Ausfall im nachgeschalteten Knoten oder in der nachgeschalteten Verbindung detektiert wird.

13. Verfahren nach Anspruch 8, wobei die auf den zumindest einen Transportweg bezogenen Informationen aus einer oder mehreren Kennungen bestehen, welche dem zumindest einen Transportweg entsprechen.

14. Verfahren (200) nach Anspruch 12, wobei der Schritt des Einkapselns (250) umfasst:
Austauschen (251) eines Eintrittslabels für das Netzknotengerät (100) des zumindest einen Transportweges mit dem Eintrittslabel für das Peer-Endgerät des zumindest einen Transportweges am Netzknotengerät;
Weiterleiten (252) von Verkehr vom Netzknotengerät an das Peer-Endgerät durch Labelumschalten über den Sicherungsweg; und
Weiterleiten (253) von Verkehr auf der Basis des Eintrittslabels für das Peer-Endgerät am Peer-Endgerät.

15. Computerprogramm-Produkt, umfassend ein computerlesbares Medium, welches darauf computer-ausführbare Codes gespeichert hat, welche, wenn ausgeführt, einen Prozessor veranlassen, das Verfahren (200) nach einem der Ansprüche 8 bis 14 auszuführen.

## Revendications

1. Dispositif de noeud de réseau (100) destiné à configurer une réparation locale afin de protéger son noeud en aval ou sa liaison en aval dans au moins un chemin de transport, comprenant :
une unité de construction (110) apte à construire un message de découverte destiné à découvrir une étiquette d'entrée pour un dispositif d'extrémité pair dudit au moins un chemin de transport, dans lequel le message de découverte comprend des informations connexes audit au moins un chemin de transport ;
une unité de transmission (120) apte à transmettre le message de découverte, sur un chemin de protection pour protéger le noeud en aval ou la liaison en aval, au dispositif d'extrémité pair du chemin de protection ; et
une unité de réception (130) apte à recevoir un message de réponse de découverte, comprenant l'étiquette d'entrée, en provenance du dispositif d'extrémité pair, le message de réponse de découverte étant construit par le dispositif d'extrémité pair sur la base du message de découverte.

2. Dispositif de noeud de réseau (100) selon la revendication 1, dans lequel le dispositif de noeud de réseau et le dispositif d'extrémité pair correspondent à des routeurs à commutation d'étiquettes dans un réseau de commutation multiprotocole par étiquette (MPLS), et ledit au moins un chemin de transport correspond à un chemin à commutation d'étiquettes (LSP) (1300) dans le réseau de commutation MPLS.

3. Dispositif de noeud de réseau (100) selon la revendication 1, dans lequel le chemin de protection correspond à un chemin d'entité de maintenance de sous-chemin (SPME) (1100).

4. Dispositif de noeud de réseau (100) selon la revendication 1, comprenant en outre une unité de configuration (140) apte à configurer un objet de basculement comme comportant l'étiquette d'entrée.

5. Dispositif de noeud de réseau (100) selon la revendication 4, comprenant en outre une unité d'encapsulation (150) apte à encapsuler le trafic dudit au moins un chemin de transport dans le chemin de protection, en utilisant l'objet de basculement lorsqu'une défaillance est détectée dans le noeud en aval ou la liaison en aval.

6. Dispositif de noeud de réseau selon la revendication 1, dans lequel les informations connexes audit au moins un chemin de transport représentent un ou plusieurs identifiants correspondant audit au moins un chemin de transport.

7. Dispositif de noeud de réseau (100) selon la revendication 5, dans lequel l'unité d'encapsulation (150) comprend :
une unité de permutation (151) apte à permuter une étiquette d'entrée pour le dispositif de noeud de réseau dudit au moins un chemin de transport avec l'étiquette d'entrée pour le dispositif d'extrémité pair dudit au moins un chemin de transport, dans lequel l'étiquette d'entrée pour le dispositif d'extrémité pair est utilisée en vue d'acheminer le trafic au niveau du dispositif d'extrémité pair ; et
une unité d'acheminement (153) apte à acheminer le trafic, du dispositif de noeud de réseau au dispositif d'extrémité pair, par une commutation d'étiquette sur le chemin de protection.

8. Procédé (200), mis en oeuvre dans un dispositif de noeud de réseau (100), d'obtention d'une étiquette d'entrée pour un dispositif d'extrémité pair d'au moins un chemin de transport, le dispositif de noeud de réseau étant utilisé en vue de configurer une réparation locale afin de protéger son noeud en aval ou sa liaison en aval dans ledit au moins un chemin de transport, comprenant les étapes ci-dessous consistant à :
construire (210) un message de découverte destiné à découvrir l'étiquette d'entrée, dans lequel le message de découverte comprend des informations connexes audit au moins un chemin de transport ;
transmettre (220) le message de découverte, sur un chemin de protection pour protéger le noeud en aval ou la liaison en aval, au dispositif d'extrémité pair du chemin de protection ; et
recevoir (230) un message de réponse de découverte, comprenant l'étiquette d'entrée, en provenance du dispositif d'extrémité pair, le message de réponse de découverte étant construit par le dispositif d'extrémité pair sur la base du message de découverte.

9. Procédé (200) selon la revendication 8, dans lequel le dispositif de noeud de réseau et le dispositif d'extrémité pair correspondent à des routeurs à commutation d'étiquettes dans un réseau de commutation multiprotocole par étiquette (MPLS), et ledit au moins un chemin de transport correspond à un chemin à commutation d'étiquettes (LSP) (1300) dans le réseau de commutation MPLS.

10. Procédé (200) selon la revendication 8, dans lequel le chemin de protection correspond à un chemin d'entité de maintenance de sous-chemin (SPME) (1100).

11. Procédé (200) selon la revendication 8, comprenant en outre l'étape consistant à configurer (240) un objet de basculement comme comportant l'étiquette d'entrée.

12. Procédé (200) selon la revendication 11, comprenant en outre l'étape consistant à encapsuler (250) le trafic dudit au moins un chemin de transport dans le chemin de protection, en utilisant l'objet de basculement lorsqu'une défaillance est détectée dans le noeud en aval ou la liaison en aval.

13. Procédé selon la revendication 8, dans lequel les informations connexes audit au moins un chemin de transport représentent un ou plusieurs identifiants correspondant audit au moins un chemin de transport.

14. Procédé (200) selon la revendication 12, dans lequel l'étape d'encapsulation (250) comporte les étapes ci-dessous consistant à :
permuter (251) une étiquette d'entrée pour le dispositif de noeud de réseau (100) dudit au moins un chemin de transport avec l'étiquette d'entrée pour le dispositif d'extrémité pair dudit au moins un chemin de transport, au niveau du dispositif de noeud de réseau ;
acheminer (252) le trafic, du dispositif de noeud de réseau au dispositif d'extrémité pair, par une commutation d'étiquette sur le chemin de protection ; et
acheminer (253) le trafic, sur la base de l'étiquette d'entrée pour le dispositif d'extrémité pair, au niveau du dispositif d'extrémité pair.

15. Produit-programme informatique comprenant un support lisible par ordinateur sur lequel sont stockés des codes exécutables par ordinateur, qui, lorsqu'ils sont exécutés, amènent un processeur à mettre en oeuvre le procédé (200) selon l'une quelconque des revendications 8 à 14.
